(19) **Europäisches Patentamt** / **European Patent Office** / **Office européen des brevets**

(11) **EP 4 277 744 B1**

(12) **EUROPEAN PATENT SPECIFICATION**

(45) Date of publication and mention
of the grant of the patent:
**14.01.2026 Bulletin 2026/03**

(21) Application number: **22702584.8**

(22) Date of filing: **14.01.2022**

(51) International Patent Classification (IPC):
**B01J 29/40** *(2006.01)* **B01J 29/08** *(2006.01)*

(52) Cooperative Patent Classification (CPC):
**C10G 11/05; B01J 29/40; B01J 29/82;
B01J 35/647; B01J 37/0045; C10G 11/18;**
C10G 2300/1003; C10G 2300/1011

(86) International application number:
**PCT/US2022/012608**

(87) International publication number:
**WO 2022/155525 (21.07.2022 Gazette 2022/29)**

(54) **FCC CATALYST WITH PSEUDO SOLID STATE CRSYTALLIZED ZEOLITE**

FCC-KATALYSATOR MIT PSEUDOFESTKÖRPER-CRISYTALISIERTEM ZEOLITH

CATALYSEUR DE FCC À PSEUDO-ZÉOLITE CRISTALYSÉE À L'ÉTAT SOLIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.01.2021 US 202163138048 P**

(43) Date of publication of application:
**22.11.2023 Bulletin 2023/47**

(73) Proprietor: **ALBEMARLE CORPORATION
Charlotte, North Carolina 28209 (US)**

(72) Inventors:
• **EVANS, Daniel**
**Seabrook, Texas 77586 (US)**
• **STROHM, James**
**League City, Texas 77573 (US)**
• **DAI, Heng**
**La Porte, Texas 77571 (US)**

(74) Representative: **SSM Sandmair
Patentanwälte Rechtsanwalt
Partnerschaft mbB
Joseph-Wild-Straße 20
81829 München (DE)**

(56) References cited:
**WO-A1-2017/015597 WO-A1-2019/140223
WO-A1-2019/140249**

• **WANG BO ET AL: "Synthesis method for
introducing mesoporosity in a faujasitic-like
zeolite system from a sodium aluminosilicate gel
composition", MICROPOROUS AND
MESOPOROUS MATERIALS, vol. 239, 11 October
2016 (2016-10-11), pages 195 - 208, XP029822533,
ISSN: 1387-1811, DOI: 10.1016/
J.MICROMESO.2016.10.008**

**Description**

**FIELD OF THE INVENTION**

The present invention pertains to the preparation of zeolites through a pseudo solid state crystallization process and their use in an FCC Catalyst composition. The present invention further pertains to the use of such zeolites as active ingredients in FCC catalytic material.

**BACKGROUND**

In a typical zeolite manufacturing process, zeolites are crystallized using a solution that is typically less than 25 wt% solids. These reactions are most often run in a slurry form with a significant amount of water present. The amount of water can reduce production amounts and can be more expensive to run. In the present application, the crystallization of zeolites is run at a greatly increased solids content ( >15 % solids, more typically >30 wt % solids). As a result, each crystallization reaction will result in an increase of zeolite product made per batch. It was also found that zeolite crystallization utilizing the present invention may provide the synthesized zeolites advantageous properties improving their performance in the various applications where they are used. Most notably, mesoporosity can be detected in crystallizations that occur at higher wt% solids, such as 30-80 wt%, particularly in pentasil type zeolites.

Zeolites are a known ingredient in the preparation of FCC catalysts and additives. For example, the preparation of attrition resistant catalysts is disclosed in several prior art documents. U.S. Pat. No. 4,086,187 discloses a process for the preparation of an attrition resistant catalyst by spray-drying an aqueous slurry prepared by mixing (i) a faujasite zeolite with a sodium content of less than 5 wt % with (ii) kaolin, (iii) peptized pseudoboehmite, and (iv) ammonium polysilicate. The attrition resistant catalysts according to U.S. Pat. No. 4,206,085 are prepared by spray-drying a slurry prepared by mixing two types of acidified pseudoboehmite, zeolite, alumina, clay, and either ammonium polysilicate or silica sol.

US 20200338536 discloses a process for the preparation of a catalyst and a catalyst comprising enhanced mesoporosity is provided herein. In one embodiment, a particulate FCC catalyst comprising 2 to 50 wt % of one or more ultra stabilized high $SiO_2/Al_2O_3$ ratio large pore faujasite zeolite or a rare earth containing USY, 0 to 50 wt % of one or more rareearth exchanged large pore faujasite zeolite, 0 to 30 wt % of small to medium pore size zeolites, 5 to 45 wt % quasi-crystalline boehmite, 0 to 35 wt % microcrystalline boehmite, 0 to 25 wt % of a first silica, 2 to 30 wt % of a second silica, 0.1 to 10 wt % one or more rare earth components showing enhanced mesoporosity in the range of 6-40 nm, the numbering of the silica corresponding to their orders of introduction in the preparation process.

US 20180361367 discloses a process for manufacturing a Fluid Catalytic Cracking catalyst additive composition with a novel binder. The steps involve mixing an alumina source with water to make a slurry; adding to the alumina slurry an amount of $P_2O_5$ source; the slurry is then stirred and reacted under controlled temperature and time conditions to form an aluminum phosphate binder; adding to the aluminum phosphate binder a zeolite, an amount of silica binder and an amount of clay; and spray-drying the slurry to form catalyst additive particles. The catalyst additive composition comprises about 35 wt % to about 65 wt % zeolite; about 0 wt % to about 10 wt % silica; about 15 wt % to about 50 wt % clay and an aluminum phosphate binder comprising about 2.5 wt % to 5 wt % amorphous or pseudo-boehmite alumina and about 7 wt % to 15 wt % phosphoric acid.

US 6,916,757 discloses a catalyst composition suitable for reacting hydrocarbons, e.g., conversion processes such as fluidized catalytic cracking (FCC) of hydrocarbons, comprises attrition resistant particulate having a high level (30-85%) of stabilized zeolites having a constraint index of 1 to 12. The stabilized zeolite is bound by a phosphorous compound, alumina and optional binders wherein the alumina added to make the catalyst is about 10% by weight or less and the molar ratio of phosphorous (P2O5) to total alumina is sufficient to obtain an attrition index of about 20 or less.

Mesoporosity is a known desirable characteristic in zeolites. For example, in "Synthesis method for introducing mesoporosity in a faujasitic-like zeolite system from a sodium aluminosilicate gel composition" B. Wang, P.K. Dutta / Microporous and Mesoporous Materials 239 (2017) 195 - 208 it is disclosed a synthesis method of hierarchical faujasitic structures from a sodium aluminosilicate composition. Gels were used as starting materials for synthesis. With these partially dehydrated gels, extensive zeolite nucleation did occur, and the extent was varied both with the degree of dehydration and the temperature at which the dehydrated sample was maintained.

There remains a need to develop faster and more reliable manufacturing process for zeolites and a process that can create inherent mesoporosity. These zeolites are then used in an FCC catalyst composition.

**BRIEF DESCRIPTION OF THE INVENTION**

The present invention relates to an improved preparation of zeolitic materials through condensed gel crystallizations. The present disclosure describes methods for improved preparation of zeolites. The resulting zeolites can show improved mesoporosity without any post-treatment to create mesoporosity. In addition, improved mesoporosity can be formed without the use of an organic template. This effect is particularly prominent in ZSM-5 zeolites, for example. In a typical zeolite manufacturing process, zeolites are crystallized at less than 25 wt% solids. These reactions are most often run in a slurry form with a significant amount of water present. The amount of water can reduce production amounts and can be more expensive to run. In the current invention, the crystallization of zeolites is run at a greatly increased solids content (greater than about 15 wt% solids, more typically greater than about 30 wt% solids). As a result, the product of each crystallization reaction will result in an increase in product yield. Also, increased mesoporosity can be detected at low water content due to presence of very little solvent in the crystallization reaction. Reduced solvent for crystallization also improves process efficiency by reducing energy required for the crystallization reaction, while improving the sustainability and environmental impact by conserving resources (water and natural gas) and reducing water and CO2 The catalyst composition according to the present invention is defined in appended claim 1, while the catalytic process using said catalyst according to the invention is defined in claim 13.

The one or more zeolites of the inventive catalyst composition are prepared by preparing an aqueous precursor mixture, removing at least 5 wt% of the total water from the aqueous precursor solution to create a solution with greater solids content, and then finally crystallizing the solution to create a zeolite product.

Thus, in a further embodiment, provided is a process for the preparation of an aluminosilicate composition comprising (a) preparing an aqueous precursor mixture from water, a silicon source, an aluminum source; (b) removing at least 5 wt% of the total water from the aqueous precursor solution to create a solution with greater solids content (c) crystallizing the solution of step (b) to create an aluminosilicate composition.

In a further embodiment, provided is a process for the preparation of a zeolite material by preparing an aqueous precursor mixture, removing at least 5 wt% of the total water from the aqueous precursor solution to create a solution with greater solids content, followed by aging the condensed gel at one temperature, and then finally crystallizing the solution to create a zeolite product.

In another embodiment, provided is a process for the preparation of an aluminosilicate composition comprising (a) preparing an aqueous precursor mixture from water, a silicon source, an aluminum source; (b) removing at least 5 wt% of the total water from the aqueous precursor solution to create a solution with greater solids content; (c) aging the solution of step (b) with or without additional water added to the solution; (d) crystallizing the solution of step (c) to create an aluminosilicate composition

Without intending to be limited by any particular outcome of the utility of the zeolites made by the present invention, a catalyst utilizing the zeolites of the present invention is expected to show improved benefits over that known in the art. The zeolites that would benefit from the disclosed process include FAU, MFI, MEL, IMF, MSE, MFS, MTT, CFI, FER, MWW, TUN, TON, MEI, EWS, EMT, OFF, ERI, BEA, ITH, LTA, LTL, MER, MTF, MOR, MTW, NES, EON, EUO, ABW, GIS, CHA, RHO, STF, AFI, ITW, STI, CSV, IFW, ITN, BPH, NAT, PCR, MRE, SSO, CAS, IFR, IFO, MAZ, SZR, SFE, STT, AEL, AEI, AFO, ISV, ITE. More specifically the following zeolites would benefit from the disclosed process. Zeolite Y, including HY, USY, dealuminated Y, RE-Y and RE-USY, ZSM-5, ZSM-11, IM-5, MCM-68, ZSM-57, ZSM-23, CIT-5, ZSM-35, MCM-22, MCM-56, MCM-49, UZM-8, EMM-10, ITQ-2, ITQ-30, TNU-9, ZSM-22, ZSM-18, EMM-26, Zeolite T, EMC-2, Offretite, Beta, ITQ-13, Zeolite A, Zeolite L, MCM-35, mordenite, ZSM-12, NU-87, ECR-1, EU-1, ZSM-50, Li-A, Na-P1, Na-P2, Chabazite, SSZ-13, SAPO-34, zeolite RHO, SSZ-35, SAPO-5, ITQ-12, Stilbite, CIT-7, ITQ-39, Linde Q, UZM-4, Natrolite, IPC-4, ZSM-48, SSZ-61, ITQ-4, ITQ-51, Mazzite, ZSM-4, SUZ-4, SSZ-48, SSZ-23, SAPO-11, SAPO-31 AIPO-18, SAPO-18, SAPO-41, ITQ-7, ITQ-3, SSZ-36, MCM-58.

If the catalyst uses faujasite made by the present invention, the catalyst is expected to exhibit improved bottoms conversion and equivalent to lower coke. Therefore, a further embodiment is provided an FCC catalyst composition comprising about 10 to about 80 wt% one or more zeolites made from the processes described herein, about 15 to about 50 wt% quasicrystalline boehmite, about 0 to about 50 wt% microcrystalline boehmite, about 0 to about 25 wt% silica, and the balance clay.

In a still further embodiment, provided is a process for cracking a feedstock said process comprising the steps of:

a) providing an FCC catalyst composition comprising about 20 to about 80 wt% of one or more zeolites, about 15 to about 50 wt% quasi crystalline boehmite, about 0 to about 50 wt% microcrystalline boehmite, about 0 to about 25 wt% silica, and the balance clay;

b) contacting the FCC catalyst with said feedstock at a temperature in the range of from 400 to 650°C, with a dwell time in the range of from 0.5 to 12 seconds.

Once crystallized, zeolites can be used in their typical fashion. For example, such zeolites would be useful in FCC Catalysts and FCC Additives as is known in the art. For example, an FCC Catalyst can be made by (a) preparing a slurry comprising clay, zeolite, a sodium-free silica source, quasi-crystalline boehmite, and micro-crystalline boehmite, provided that the slurry does not comprise peptized quasi-crystalline boehmite, (b) adding a monovalent acid to the slurry, (c) shaping the slurry to form particles. Thus, in one embodiment, provided is a particulate FCC catalyst comprising about 10 to about 80 wt% one or more zeolites made from the process described herein, about 15 to about 50 wt% quasicrystalline boehmite (QCB), about 0 to about 50 wt% microcrystalline boehmite (MCB), about 0 to about 25 wt% silica. In addition, multiple zeolites may be used such that you can have an embodiment with about 2 to about 80 wt% one or more zeolites, about 0 to about 78 wt% of one or more second zeolite, about 15 to about 50 wt% quasicrystalline boehmite (QCB), about 0 to about 50 wt% microcrystalline boehmite (MCB), greater than about 0 to about 25 wt% silica, and 0 to about 20 wt% phosphate (P2O5).

These and still other embodiments, advantages and features of the present invention shall become further apparent from the following detailed description, including the appended claims.

## DETAILED DESCRIPTION OF THE INVENTION

Unless otherwise indicated, weight percent (e.g., 1-10 wt%) as used herein is the dry base weight percent of the specified form of the substance, based upon the total dry base weight of the product for which the specified substance or form of substance is a constituent or component. It should further be understood that, when describing steps or components or elements as being preferred in some manner herein, they are preferred as of the initial date of this disclosure, and that such preference(s) could of course vary depending upon a given circumstance or future development in the art.

### General Procedure

Overall, zeolite crystallizations typically proceed in slurry type reactions with a very large amount of water present. For example, zeolites, such as ZSM-5 and Y zeolites, are crystallized at less than 25 wt% solids. The present invention takes typical zeolite gels and performs a treatment on them to condense them by removal of water, which will be discussed herein.

The first step in the process is to create the zeolitic gel. This can be done by any of the methods known in the art for various zeolitic materials, including but not limited to aluminosilicate zeolites, aluminum phosphate zeolites, gallium phosphate zeolites, silicon aluminum phosphate zeolites, metal aluminum phosphate zeolites (where metal represents a transition metal element), germanosilicate zeolites, borosilicate zeolites, beryllosilicate zeolites, zincosilicate zeolites, and titanosilicate zeolites. For example, the first step in a typical process for preparing an aluminosilicate-based zeolite involves the preparation of an aqueous precursor mixture comprising a silicon source, an aluminum source, and templating agent, organic or inorganic structure directing agent or zeolitic seed. The pH of the precursor mixture depends on the zeolite to be crystallized. The amount of aluminum and silicon source present in the precursor mixture depends on the desired SAR of the resulting zeolite. Similar approaches are known in the art for other zeolitic materials that may or may not contain other elements.

It is possible for the precursor mixture to also contain an organic directing template. However, such templates are expensive and-as a result of their decompositionenvironmentally harmful compounds are released upon heating of the so-prepared zeolites. Hence, it is preferred not to use a template in the process according to the invention.

Suitable aluminum sources include aluminum salts, such as $Al_2(SO_4)_3$, $AlCl_3$, $AlPO_4$, $Al_2(HPO_4)_3$, and $Al(H_2PO_4)_3$, and water-insoluble aluminum compounds, e.g., alumina and aluminum trihydrate ($Al(OH)_3$) such as gibbsite and bauxite ore concentrate (BOC), thermally treated aluminum trihydrate such as flash-calcined aluminum trihydrate, (pseudo)boehmite, aluminum chlorohydrol, aluminum nitrohydrol, and sodium aluminate. Also, mixtures of one or more of these aluminum sources can be used. For those skilled in the art, it would be obvious that other sources of aluminum and/or alumina can also be used.

Doped aluminum sources can be prepared by preparation of the aluminum source in the presence of the dopant, impregnation of the aluminum source with the dopant, or ionexchanging the aluminum source with the dopant. Doped (pseudo)boehmite, for instance, can be prepared by hydrolysis of aluminum alkoxide in the presence of a dopant, hydrolysis and precipitation of aluminum salts in the presence of a dopant, or by aging a slurry of (thermally treated) aluminum trihydrate, amorphous gel alumina, or less crystalline(pseudo)boehmite in the presence of a dopant. For more information concerning the preparation of doped (pseudo)boehmite reference is made to International Patent Application Nos. WO 01/12551, WO 01/12552, and WO 01/12554.

Suitable silicon sources include sodium silicate, sodium meta-silicate, stabilized silica sols, silica gels, polysilicic acid, tetra ethylortho silicate, fumed silicas, precipitated silicas, and mixtures thereof. For those skilled in the art, it would be obvious that other sources of silicon and/or silica can also be used.

Doped silica sol, for instance, can be obtained by preparing a silica sol from water glass and acid (e.g. sulfuric acid), and exchanging the sodium ions with the desired dopant. Alternatively, water glass, acid (e.g. sulfuric acid), and dopant are coprecipitated to form a doped silica sol. For those skilled in the art, it would be obvious that other sources of silicon and/or silica can also be used.

Other sources of silicon and aluminum may also be used, wherein both the silicon and aluminum are supplied by the same source material. Examples include, but are not limited to, sands and clays such as kaolin, illinite, and bentonite.

These sands and clays may be used as-is or undergo a treatment to adjust the silicon and aluminum content in the clays or sands. Example treatments may include acid or base leaching of silicon, aluminum, or other elements found in the sand or clay. Additional treatments may also include the addition of silicon or aluminum using aforementioned silicon or aluminum sources. These clays may also contain other elements such as titanium, magnesium, iron, sodium, calcium, zirconium, phosphorous, cerium, barium, zinc, boron, lithium, and rare earth metals. For those skilled in the art, it would be obvious that other sources for both silicon and aluminum and other treatments for adjusting the silicon to aluminum ratio can also be used.

Suitable dopants for the aluminum and/or the silicon source include compounds comprising rare earth metals such as Ce, La, Y, Gd, Eu, Pr, Sm, Ho, Nd, Er, Yb, or Tb; alkaline and alkaline earth metals such as Mg, Ca, K, Na, and Ba, transition metals such as Zr, Mn, Fe, Ti, Ag, Au, Cu, Ni, Zn, Mo, W, V, and Sn, actinides, noble metals such as Rh, Ru, Pt and Pd, group III, IV, or V elements such as Ga, B, In, Ge and/or P. Preferred dopants include P, La, Ga, Fe, Y, Mn, Ag, Ti, Cu, Zn, Pr, Ce, In, Gd, Eu, and Yb; more preferred are P, Mn, Ge, Ga, La, Y, and Zn. The optional dopant(s) present in the silicon and/or aluminum source and the dopant in the doped non-zeolitic seeds can be the same or different.

Suitable acids or bases can be added to the precursor mixture to adjust the pH depending the zeolite being prepared or manufactured. Suitable acids include sulfuric acid, nitric acid, and hydrochloric acid. Suitable bases include sodium hydroxide, lithium hydroxide, potassium hydroxide, cesium hydroxide, ammonium hydroxide, magnesium hydroxide, and calcium hydroxide. To those skilled in the art, it would be known that other acids or bases, including organic acids and bases, could be used to adjust the pH of the slurry.

The above ingredients are mixed to form a precursor solution (parent slurry). The resulting parent solution typically has less than 25 wt% solids. A unique aspect of the present invention is that the typical solution is then processed to reduce the water content prior to crystallization. Typically, at least 5 wt% of the initial water content of the parent slurry and preferably more than 10 wt% of the initial water content of the parent slurry is removed to yield a condensed gel with greater solids content than the parent gel.

Water removal can be performed using multiple techniques and processes, commonly known by those skilled in the art. Such treatments can include using thermal energy to evaporate the water, filtration using common filtration equipment, decanters, centrifuge, or freeze-drying. Thermal treatments can include evaporating off the water in a vessel, flash drier, spray-drier, freeze drier, or calciner. Three such examples for removing water are provided. The first method of reducing water is through thermal treatments to generate a so called xerogel. This is done by taking the parent zeolite gel that has been prepared and removing a portion of the water by any suitable means, such as evaporating or boiling off the water under constant pressure in an oven or vessel, heating the gel in a process line at elevated pressure and evaporating the water by releasing the pressure into a lower pressure vessel, evaporating the water under a vacuum or at reduced pressure in an oven or vessel, or continuously introducing the gel to a heated vessel sufficient to evaporate a portion of the water. This results in a condensed gel that can range from a wet slurry or paste to a dry or semi-dry powder with varying water content. This drying process can be done at many durations and temperatures, and using any combination of drying techniques. Overall, once the xerogel has been formed, it can be used directly for the crystallization of zeolite. In an optional step, the xerogel can be aged at a temperature above 25°C to 300°C for a period of 5 minutes to 200 hours prior to crystallization of the zeolite. The aging step is preferably between 15 minutes to 48 hours, and most preferably between 1 hour and 36 hours. The xerogel can also be mixed with water to make an aqueous solution/slurry/paste/powder at a desired solids content.

The solids content is typically greater than about 10 wt% to about 95 wt%, and more preferably greater than about 25 wt%, and most preferably greater than about 30 wt%. The solution can be directly crystallized or allowed to age at an intermediate temperature above 25°C but below the crystallization temperature for 5 minutes to 200 hours, preferably between 15 minutes to 48 hours, and most preferably between 1 hour and 36 hours. The solution that is unaged or after aging is then reacted at 60-300 °C for 1 minute to 48 hours, or more, and allowed to crystallize. The crystallization can be performed in one or more temperatures or times throughout the crystallization process. The reaction, if there is a proper amount of water present, may result in high quality zeolite with increased mesoporosity, with pore sizes greater than 2nm and less than 200nm at much higher wt% solids during the crystallization reaction.

A second method of removing water is taking the typical zeolite solution discussed above and processing the solution in a spray dryer resulting in a spray dried condensed gel, called a spray gel. The spray drying typically results in a flowable powder with greater than 40 wt% solids, more preferably greater than 75 wt% solids and most preferably greater than 80 wt% solids. The spray gel is then reacted at 60-300°C for 1 minute to 48 hours and allowed to crystallize. Alternatively, the spray gel can be aged at temperatures above 25°C, but below the crystallization temperature for 5 minutes to 200 hours, prior to increasing the temperature to allow for crystallization. Alternatively, the spray gel is then mixed with water to make a gel at a desired solids content, prior to or after the optional aging step. The solids content suitable for crystallization is typically greater than about 10 wt% to about 95 wt%, and more preferably greater than about 20 wt%, and most preferably greater than about 50 wt%. The solution is then reacted at 60-300°C for 1 minute to 48 hours, or more, and allowed to crystallize. In an optional step, the solution can be aged at a temperature greater than 25°C but below the crystallization temperature for 1 minute to 200 hours, or more, prior to crystallizing at a different crystallization temperature. The solution can be reacted at one or more temperatures or time periods during the crystallization process as a staged-crystallization. The reaction, if there is a proper amount of water present, may result in high quality zeolite with increased mesoporosity, with pore sizes greater than 2nm and less than 200nm at much higher wt% solids.

The third method is to remove the water via filtration. A condensed gel can be created via filtration methods, to make a filtered gel. This can be done by utilizing the zeolite precursor solution previously discussed and instead of removing the water via thermal methods, the water is removed via filtration. This can be done as known in the art such as with a simple Buchner funnel/Erlenmeyer flask filtration set up, or through other industrial techniques such as decanting, leaf filters, press filters, belt filters, pressure filters, vacuum filters, rotary-drum filters, hydrocylones, centrifuging, centrifugal-decanters, or other clarifying filters. Once filtered, the gel typically has greater than 25 wt% solids. The material can be crystallized at this point. The filtered gel is then reacted at 60-300 °C for 1 minute to 48 hours and allowed to crystallize. The reaction, if there is a proper amount of water present, may result in high quality zeolite with increased mesoporosity, with pore sizes greater than 2nm and less than 200nm at much higher wt% solids.

The filtered gel can be optionally further treated to remove water via additional drying. For example, the resulting filtered gel is taken to an oven and dried at 50-600°C to a form a dry filtered gel powder usually with less than 50 wt% water, and more typically with 5-40 wt% water. Alternatively, the dry filtered gel can be prepared by applying thermal energy during or before or after the filtration process to aid in the reduction of water content of the filtered gel with less than 60 wt% water, and more typically with 5-40 wt% water. From there, the dried filtered gel is then reacted at 60-300°C, more preferred from 80-240°C, and most preferred from 100-220°C for 1 minute to 48 hours, or more, and allowed to crystallize. Alternatively, the dried filtered gel can also be mixed with water to make a gel at a desired solids content. The solids content is typically greater than about 10 wt% to about 95 wt%, and more preferably greater than about 25 wt%, and most preferably greater than about 30 wt%. The solution is then reacted at 60-300°C for 1 minute to 48 hours, or more, and allowed to crystallize. In an optional step, the filtered gel, dry filtered gel, or solution containing the filtered or dried filtered gel can be aged prior to crystallizing at a temperature above 25°C to below the crystallization temperature for 1 minute to 200 hours, or more, before crystalizing. The solution can be reacted at one or more temperatures or time periods during the crystallization process as a staged-crystallization. The reaction, if there is a proper amount of water present, may result in high quality zeolite with increased mesoporosity, with pore sizes greater than 2nm and less than 200nm at much higher wt% solids.

As noted above, in each of the processes to create the zeolites, there may be an optional additional step to further improve the properties of the zeolite by aging the gel prior to crystallization or perform a staged crystallization. After preparing a condensed gel using any of the previously prescribed drying methods, and before the reaction, the gel can be heated to a temperature between 25°C and 300°C, preferably between 40°C and 230°C and most preferred between 50°C and 170°C and aged for a period of time between 1 minute and 200 hours, or more, provided that the aging temperature is below the final crystallization maximum temperature used for crystallization. The gel can be aged immediately after forming the condensed gel or after a condensed gel solution is made by adding water or steam back to the condensed gel. The aging process can occur in a heated vessel, process piping, heat exchanger, or other process equipment. The aging process can be performed without additional water loss from the condensed gel or condensed gel solution, by aging in a closed vessel, autoclave, or similar equipment.

Another embodiment of this invention is a multi-step crystallization process wherein the condensed gel or condensed gel solution is crystallized by staged-crystallization involving more than one crystallization temperature. The staged-crystallization process involves introducing the condensed gel derived from any of the aforementioned processes for removal of water or condensed gel solution prepared by reintroducing water or steam to the condensed gel, to a vessel or crystallizer preheated to a temperature T1 between 5°C and 300°C. The gel or the solution is then allowed to age at a temperature T2 between 25°C and 300 °C for a period of time between 5 minute and 200 hours, preferably between 15 minutes and 48 hours, followed by further heating the condensed gel or condensed gel solution to a crystallization temperature TC between 60°C and 300°C wherein TC is at a higher temperature than T2, for a time between 1 minute and 48 hours. Additionally, multiple aging steps prior to reaching the crystallization temperature or after reaching the crystallization temperature can be used to alter the properties of the formed zeolite or aluminosilicate material.

Several advantages of the present invention have been noted. First, as less water is being used during crystallization, more product is made during each run, improving the crystallization process efficiency and reducing the environmental impact of the process. Second, certain zeolites, such as ZSM-5, made by this method exhibit greater mesoporosity than zeolites made by the traditional method. Third, in those zeolites showing increased mesoporosity, mesoporosity is inherently formed during the crystallization. This is advantageous compared to other known technologies, where mesoporosity is formed via destruction of the zeolite crystal, such as base leaching. Preferably, the process creates at least about 10 $m^2$/g mesoporous surface area as measured by BET. More preferably, the process creates at least about 20 $m^2$/g mesoporous surface area as measured by BET and most preferably at least about 50 $m^2$/g mesoporous surface area as measured by BET.

**Use of the Resulting Zeolite**

Once crystallized, zeolites can be used in their typical fashion. For example, such zeolites would be useful in FCC Catalysts and FCC Additives as is known in the art. Such zeolites could be used in accordance with the following patents US 9,381,502 and US 9,6431,66 and US 20200338536.

For example, an FCC Catalyst can be made by (a) preparing a slurry comprising clay, zeolite, a sodium-free silica source, quasi-crystalline boehmite, and micro-crystalline boehmite, provided that the slurry does not comprise peptized quasi-crystalline boehmite, (b) adding a monovalent acid to the slurry, (c) shaping the slurry to form particles. Thus, in one embodiment, provided is a particulate FCC catalyst comprising about 10 to about 80 wt% one or more zeolites made from the process described herein, about 15 to about 50 wt% quasicrystalline boehmite (QCB), about 0 to about 50 wt% microcrystalline boehmite (MCB), about 0 to about 25 wt% silica. In addition, multiple zeolites may be used such that you can have an embodiment with about 2 to about 80 wt% one or more Y zeolites, about 0 to about 78 wt% of one or more second zeolite, about 15 to about 50 wt% quasicrystalline boehmite (QCB), about 0 to about 50 wt% microcrystalline boehmite (MCB), greater than about 0 to about 25 wt% silica, and 0 to about 20 wt% phosphate (P2O5).

The FCC Catalyst can be made by a typical procedures. These procedures, for example, are described in US 9,381,502 and US 9,6431,66 and US 20200338536.

As discussed, the zeolites can be used as FCC catalysts or FCC additives, hydroprocessing catalysts, alkylation catalysts, reforming catalysts, gas-to-liquid conversion catalysts, coal conversion catalysts, hydrogen manufacturing catalysts, dehydrogenation catalysts, dehydration catalysts, adsorbents, and automotive catalysts. The zeolites of the present invention are particularly applicable to Fluid Catalytic Cracking (FCC). In the FCC process, the details of which are generally known, the catalyst, which is generally present as a fine particulate comprising over 90 wt% of the particles having diameters in the range of about 5 to about 300 microns. In the reactor portion, a hydrocarbon feedstock is gasified and directed upward through a reaction zone, such that the particulate catalyst is entrained and fluidized in the hydrocarbon feedstock stream. The hot catalyst, which is coming from the regenerator, reacts with the hydrocarbon feed which is vaporized and cracked by the catalyst. Typically temperatures in the reactor are 400-650C and the pressure can be reduced, under atmospheric or superatmospheric pressure, usually about atmospheric to about 5 atmospheres. The catalytic process can be either fixed bed, moving bed, or fluidized bed, and the hydrocarbon flow may be either concurrent or countercurrent to the catalyst flow. The process of the invention is also suitable for TCC (Thermofor catalytic cracking) or DCC. In addition, the hydrocarbon feedstock may include a blend of >0 wt% of vegetable oils (soybean, canola, corn, palm, rape seed, etc.), waste oils (used automotive oils, used cooking oils, etc.), tallow, and/or pyrolysis oil derived by any thermal or thermocatalytic treatment of biomass, plastics, municipal waste, or other industrial, agricultural, or consumer waste streams and combinations thereof.

Furthermore, once crystallized, zeolites can be used can be used in other applications that commonly use zeolitic materials. Such applications include heterogeneous catalysis in conventional and non-conventional hydrocarbon processing and conversions, exhaust gas treatment and environmental pollutant treatments, adsorbents, ion-exchange, electrochemical devices and batteries, catalytic support materials, water treatment, gas treatment or purification, and cosmetics and pharmaceuticals. It would be apparent to those skilled in the art that the process described herein could be used for the synthesis of various zeolites and the use in applications where zeolites commonly employed.

**EXAMPLES**

Performance for olefin cracking was evaluated using a pulsed fixed bed reactor system. Fresh zeolites were loaded into a quartz reactor tube and heated in a continuous He (UHP) flow of 40 mL/min to 480°C. A blend of 1-hexene ($C_{6=}$) and 1-octene ($C_{8=}$) was injected into the He flow, corresponding to a zeolite to olefin ratio of 10 (wt/wt).

An inline GC (Agilent 6890) equipped with an FID detector was used to obtain conversion and product yields on a wt % carbon basis. Relative product yields are calculated by dividing the specific product area(s) by the total area. Conversion was calculated by subtracting the total GC area of remaining C6-olefins and C8-olefins ($C_{6=}$ and $C_{8=}$ isomerization products) in the product from the feed hexene and octene and dividing by the feed hexene and octene. Product selectivity is calculated by dividing the product yield by the conversion.

$$conversion(\%) = \frac{(C_{6=} + C_{8=})_{feed} - (C_{6=} + C_{8=})_{products}}{\left(C_{6=} + C_{8=}\right)_{feed}} x100$$

Hydrogen transfer index (HTI) is determined by the ratio of i-butane divided by the total C4-hydrocarbons (i-butane, n-butane, i-butene, n-butenes, and butadienes). LPG yield is calculated by the sum of C3 (propane and propylene) and C4 hydrocarbons (i-butane, n-butane, i-butene, n-butenes, and butadienes).

Specific total BET surface area is measured by Argon adsorption at 87 K. Mesopore is defined as pore size ranging from 2 to 50 nm (IUPAC). The mesopore surface area is obtained from t-plot method. The total pore volume, mesopore volume and the pore size distribution of the fresh and deactivated catalysts were measured by DFT method from argon adsorption isotherms following examples in the literature including Thommes, M., 2007, "Textural Characterization of Zeolites and Ordered Mesoporous Materials by Physical Adsorption" in Stud. Surf. Sci. Catal, Vol 168, pp 495-524. The % mesopore volume is determined by dividing the measured mesoporous volume by the total measured pore volume. The % mesoporous surface area is determined by dividing the measured mesoporous surface area by the total measured surface area of the material.

**EXAMPLE 1**

For the first example, six samples of filtered gel were made in accordance with the invention and then crystallized to make ZSM-5 Zeolite. Each was made at varying solid wt % of 15, 20, 30, 40, 50, and 60 wt%. The properties of each sample can be seen below in Table 1.

**TABLE 1**

|  | Example 1-1 Filtered Gel 60% Solids | Example 1-2 Filtered Gel 50% Solids | Example 1-3 Filtered Gel 40% Solids | Example 1-4 Filtered Gel 30% Solids | Example 1-5 Filtered Gel 20% Solids | Example 1-6 Filtered Gel 15% Solids |
|---|---|---|---|---|---|---|
| DFT Mesopore Volume (mL/g) | 0.079 | 0.043 | 0.085 | 0.077 | 0.028 | 0.015 |
| % Mesopore Volume | 33 % | 19% | 32 % | 27 % | 14 % | 7 % |
| Ar Meso SA (m$^2$/g) | 116 | 60 | 52 | 46 | 54 | 31 |
| % Meso SA | 33 % | 17 % | 15 % | 13 % | 16 % | 9% |

**EXAMPLE 2:**

For the second example, five samples of xerogel were made in accordance with the invention and then crystallized to make ZSM-5 Zeolite. Each was made at varying solid wt % of 15, 20, 30, 40, and 50 wt%. The properties of each sample can be seen below in Table 2.

**TABLE 2**

|  | Example 2-1 Xerogel 50% Solids | Example 2-2 Xerogel 40% Solids | Example 2-3 Xerogel 30% Solids | Example 2-4 Xerogel 20% Solids | Example 2-5 Xerogel 15% Solids |
|---|---|---|---|---|---|
| DFT Mesopore Volume (mL/g) | 0.032 | 0.055 | 0.052 | 0.030 | 0.023 |
| % Mesopore Volume | 17 % | 30 % | 23 % | 16 % | 12% |
| Ar Meso SA (m$^2$/g) | 79 | 94 | 77 | 47 | 29 |
| % Meso SA | 25 % | 32% | 22% | 16 % | 9 % |

**EXAMPLE 3:**

For the third example, one comparative base zeolite ZSM-5 was manufactured by known techniques in the art. One filtered gel zeolite ZSM-5 at 60 wt % solids was manufactured. And then three xerogel zeolites (ZSM-5) were made with 40 wt % solids (crystallized at 180 C Example 3-2), 40 wt % solids (crystallized at 190 C Example 3-3) and 50 wt % solids (crystallized at 200 C Example 3-4) The properties of each sample can be seen below in Table 3.

**TABLE 3**

|  | Comparative 3 | Example 3-1 Filtered Gel 60 % Solids | Example 3-2 Xerogel 40 % Solids | Example 3-3 Xerogel 40 %Solids | Example 3-4 Xerogel 50 % Solids |
|---|---|---|---|---|---|
| DFT Mesopore Volume (mL/g) | 0.014 | 0.079 | 0.068 | 0.083 | 0.086 |

(continued)

| | Comparative 3 | Example 3-1 Filtered Gel 60 % Solids | Example 3-2 Xerogel 40 % Solids | Example 3-3 Xerogel 40 %Solids | Example 3-4 Xerogel 50 % Solids |
|---|---|---|---|---|---|
| % Mesopore Volume | 7 % | 33 % | 29 % | 33 % | 36 % |
| Ar Meso SA (m$^2$/g) | 24 | 116 | 100 | 99 | 147 |
| % Meso SA | 7 % | 33 % | 31 % | 31 % | 45% |

As can be seen from the above Table, each of the samples of the invention show significant increase in mesopores as compared to the baseline zeolite.

Each of the samples of Example 3 were then performance tested in line with the method set forth in Paragraphs 28 - 30 above. The results of the testing are set forth in Table 4 below

**TABLE 4**

| | Comparative 3 | Example 3-1 | Example 3-2 | Example 3-3 | Example 3-4 |
|---|---|---|---|---|---|
| Ethylene | 11.28 | 9.51 | 8.25 | 9.67 | 8.41 |
| Propane | 10.86 | 5.25 | 4.53 | 5.18 | 4.40 |
| Propylene | 25.16 | 33.30 | 35.08 | 34.73 | 35.69 |
| C4= | 14.66 | 23.00 | 25.93 | 24.29 | 26.30 |
| C4 saturates | 12.56 | 7.95 | 6.75 | 7.74 | 6.82 |
| C4=/C4 | 0.55 | 0.75 | 0.80 | 0.76 | 0.80 |
| BTX | 16.98 | 9.61 | 5.83 | 6.08 | 5.77 |
| Conversion | 98.28 | 94.33 | 95.02 | 96.90 | 96.12 |
| LPG | 63.25 | 69.51 | 72.29 | 71.94 | 73.21 |
| C3=/C3s | 0.70 | 0.86 | 0.89 | 0.87 | 0.89 |
| C3= selectivity | 25.60 | 35.30 | 36.92 | 35.84 | 37.13 |
| BTX select | 17.28 | 10.19 | 6.13 | 6.28 | 6.01 |
| HTI | 0.30 | 0.17 | 0.14 | 0.16 | 0.13 |

**EXAMPLE 4:**

For the fourth example, six samples of spray gel were made in accordance with the invention. Each was made at varying solid wt % of 20, 30, 40, 50, 60, and 70 % wt%. The properties of each sample can be seen below in Table 5. Each crystallization reaction was performed at 170°C with a crystallization time of 17 hours to make ZSM-5 Zeolite.

**TABLE 5**

| | Example 4-2 Spray Gel 70 % Solids | Example 4-3 Spray Gel 60% Solids | Example : 4-4 Spray Gel 50 % Solids | Example 4-5 Spray Gel 40 % Solids | Example 4-6 Spray Gel 30 % Solids | Example 4-7 Spray Gel 20 % Solids |
|---|---|---|---|---|---|---|
| DFT Mesopore Volume (mL/g) | 0.063 | 0.052 | 0.032 | 0.023 | 0.018 | 0.052 |
| % Mesopore Volume | 27 % | 23 % | 14 % | 11 % | 8% | 23 % |
| Ar Meso SA (m$^2$/g) | 97 | 80 | 41 | 36 | 29 | 87 |
| % Meso SA | 27 % | 23 % | 12 % | 10 % | 8 % | 24 % |

## EXAMPLE 5:

For the fifth example, a sample of filtered gel was crystallized directly after filtration. No water was added back into this gel. The resulting % solids of this crystallization was 35.4 % solids. The properties of each sample can be seen below in Table 6. Each crystallization reaction was performed at 170 C for 8 hrs.

TABLE 6

|  | Example 5-1 Filtered Gel Direct Crystallization 35.4 % Solids |
|---|---|
| DFT Mesopore Volume (mL/g) | 0.013 |
| % Mesopore Volume | 5 % |
| Ar Meso SA (m$^2$/g) | 25 |
| % Meso SA | 5 % |

## EXAMPLE 6:

For the sixth example, a sample of xerogel gel was crystallized directly after drying the gel to the solid state. No water was added back into this gel. The xerogel was determined to be solid at 40 wt %. The resulting % solids of this crystallization was 40 % solids. The properties of each sample can be seen below in Table 7.

TABLE 7

|  | Example 6-1 Xerogel Direct Crystallization 40 % Solids |
|---|---|
| DFT Mesopore Volume (mL/g) | 0.051 |
| % Mesopore Volume | 29 % |
| Ar Meso SA (m$^2$/g) | 37 |
| % Meso SA | 12 % |

## EXAMPLE 7:

For the seventh example, three samples of spray gel were made in accordance with the invention. The parent zeolite gel was spray dried to form a spray gel with a solid content above 70 wt%. Water was added to the spray gel to yield condensed gel solutions containing 30, 60, and 70 wt% solids. For examples 7-1 through 7-3 the resulting solutions were directly crystallized at 170°C for 17 hours to make ZSM-5 Zeolite. For examples 7-4 through 7-6 the solutions were first aged at 100°C for 24 hours without additional water removal, followed by crystallization at 170°C for 17 hours to make ZSM-5 Zeolite. The properties of each sample can be seen below in Table 8.

TABLE 8

|  | Example 7-1 Spray Gel 70 % Solids | Example 7-2 Spray Gel 60% Solids | Example 7-3 Spray Gel 30 % Solids | Example 7-4 Aged Spray Gel 70 % Solids | Example 7-5 Aged Spray Gel 60 % Solids | Example 7-6 Aged Spray Gel 30 % Solids |
|---|---|---|---|---|---|---|
| DFT Mesopore Volume (mL/g) | 0.082 | 0.100 | 0.021 | 0.124 | 0.093 | 0.018 |
| % Mesopore Volume | 35 % | 41 % | 9 % | 48 % | 38 % | 8 % |
| Ar Meso SA (m$^2$/g) | 105 | 104 | 25 | 153 | 108 | 27 |
| % Meso SA | 31 % | 32 % | 7 % | 46 % | 32 % | 8 % |

## EXAMPLE 8:

For the ninth example, Y zeolite was prepared by crystallizing a filter gel with 40wt% solids at 100°C for 24 hours. The resulting properties of the zeolite is provided in the table below. This example shows the successful production of a Y zeolite using the present invention.

**TABLE 9**

|  | Example 9-1 40 % Solids Filter Gel FAU Zeolite |
| --- | --- |
| DFT Mesopore Volume (mL/g) | 0.037 |
| % Mesopore Volume | 10 % |
| BET Meso SA (m$^2$/g) | 73 |
| % BET Meso SA | 14% |

**Claims**

1. An FCC catalyst composition comprising:

   a. about 2 to about 80 wt% one or more zeolite
   b. about 15 to about 50 wt% quasi crystalline boehmite
   c. about 0 to about 50 wt% microcrystalline boehmite
   d. greater than about 0 to about 25 wt% silica;
   optionally
   e. greater than about 0 to about 20 wt% phosphate;

   wherein the one or more zeolites are prepared by the following steps:

   a. preparing an aqueous precursor mixture;
   b. removing at least 5 wt% of the total water from the aqueous precursor solution to create a solution with greater solids content;
   c. crystallizing the solution of step (b) to create a zeolite product.

2. The FCC catalyst composition of Claim 1 wherein the one or more zeolites are faujasite type zeolites.

3. The FCC catalyst composition of Claim 1 wherein the zeolite preparation further comprises:

   a. preparing an aqueous precursor mixture from water, a silicon source, an aluminum source;
   b. removing at least 5 wt% of the total water from the aqueous precursor solution to create a solution with greater solids content;
   c. crystallizing the solution of step (b) to create an aluminosilicate composition.

4. The FCC catalyst composition of Claim 1 wherein the crystallization step (c) is thermally treated at one or more temperatures.

5. The FCC catalyst composition of Claim 2 wherein at least 10 wt%, preferably at least 25 wt%, more preferably at least 50 wt%, even more preferably at least 75 wt%, in particular at least 90 wt% of the total water is removed from the aqueous precursor.

6. The FCC catalyst composition of Claim 2 comprising a further step of rehydrating the product of step (b) to create a solution with greater than about 15 wt% solids prior to step (c).

7. The FCC catalyst composition of Claim 2 wherein step (c) comprises reacting the solution of step (b) at 60-300 °C for 1 minute to 48 hours and allowed to crystallize.

8. The FCC catalyst composition of Claim 2 wherein the water is removed by filtration, spray drying or thermal treatment.

9. The FCC catalyst composition of Claim 3 wherein the water is removed by thermal treatment at a time and temperature to create a xerogel with a solids content of greater than 35 wt% solids.

10. The FCC catalyst composition of Claim 3 wherein the water is removed by spray drying to create a flowable powder with greater than 40 wt% solids, preferably wherein the spray drying results in a composition of at least 75 wt% solids, more preferably wherein the spraydrying results in a composition of at least 80 wt% solids.

11. The FCC catalyst composition of Claim 3 wherein the water is removed by filtration to create a filtered gel of greater than about 25 wt% solids, preferably wherein the filtered gel is further thermally treated to create a dry filtered powder of at least 35 wt% solids.

12. The process of Claim 6 wherein the rehydrated solution is aged for a period of time prior to the crystallizing of step (c).

13. A process which comprises contacting a catalyst composition of the FCC catalyst of Claim 1 with a hydrocarbon feed, waste derived feedstock, a bioderived feedstock, or mixtures thereof.

**Patentansprüche**

1. FCC-Katalysatorzusammensetzung, umfassend:

    a. etwa 2 bis etwa 80 Gew.-% eines oder mehrerer Zeolithe
    b. etwa 15 bis etwa 50 Gew.-% quasikristallinen Böhmit
    c. etwa 0 bis etwa 50 Gew.-% mikrokristallinen Böhmit
    d. mehr als etwa 0 bis etwa 25 Gew.-% Siliciumdioxid;
    optional
    e. mehr als etwa 0 bis etwa 20 Gew.-% Phosphat;

    wobei der eine oder die mehreren Zeolithe durch die folgenden Schritte hergestellt werden:

    a. Herstellen einer wässrigen Vorläufermischung;
    b. Entfernen von mindestens 5 Gew.-% des gesamten Wassers aus der wässrigen Vorläuferlösung, um eine Lösung mit einem höheren Feststoffgehalt zu erhalten;
    c. Kristallisieren der Lösung aus Schritt (b), um ein Zeolithprodukt zu erzeugen.

2. FCC-Katalysatorzusammensetzung nach Anspruch 1, wobei der eine oder die mehreren Zeolithe Zeolithe vom Faujasit-Typ sind.

3. FCC-Katalysatorzusammensetzung nach Anspruch 1, wobei die Zeolithzubereitung ferner umfasst:

    a. Herstellen einer wässrigen Vorläufermischung aus Wasser, einer Siliziumquelle und einer Aluminiumquelle;
    b. Entfernen von mindestens 5 Gew.-% des gesamten Wassers aus der wässrigen Vorläuferlösung, um eine Lösung mit einem höheren Feststoffgehalt zu erzeugen;
    c. Kristallisieren der Lösung aus Schritt (b), um eine Alumosilikatzusammensetzung zu erzeugen.

4. FCC-Katalysatorzusammensetzung nach Anspruch 1, wobei der Kristallisationsschritt (c) bei einer oder mehreren Temperaturen thermisch behandelt wird.

5. FCC-Katalysatorzusammensetzung nach Anspruch 2, wobei mindestens 10 Gew.-%, vorzugsweise mindestens 25 Gew.-%, noch bevorzugter mindestens 50 Gew.-%, noch bevorzugter mindestens 75 Gew.-%, insbesondere mindestens 90 Gew.-% des gesamten Wassers aus dem wässrigen Vorläufer entfernt werden.

6. FCC-Katalysatorzusammensetzung nach Anspruch 2, umfassend einen weiteren Schritt der Rehydratisierung des Produkts aus Schritt (b), um vor Schritt (c) eine Lösung mit mehr als etwa 15 Gew.-% Feststoffen herzustellen.

7. FCC-Katalysatorzusammensetzung nach Anspruch 2, wobei Schritt (c) das Reagierenlassen der Lösung aus Schritt (b) bei 60 bis 300 °C für 1 Minute bis 48 Stunden und das Kristallisierenlassen umfasst.

8. FCC-Katalysatorzusammensetzung nach Anspruch 2, wobei das Wasser durch Filtration, Sprühtrocknung oder thermische Behandlung entfernt wird.

**9.** FCC-Katalysatorzusammensetzung nach Anspruch 3, wobei das Wasser durch thermische Behandlung zu einem Zeitpunkt und bei einer Temperatur entfernt wird, um ein Xerogel mit einem Feststoffgehalt von mehr als 35 Gew.-% Feststoffen zu erzeugen.

**10.** FCC-Katalysatorzusammensetzung nach Anspruch 3, wobei das Wasser durch Sprühtrocknung entfernt wird, um ein fließfähiges Pulver mit mehr als 40 Gew.-% Feststoffen zu erzeugen, vorzugsweise wobei die Sprühtrocknung zu einer Zusammensetzung von mindestens 75 Gew.-% Feststoffen führt, noch bevorzugter wobei die Sprühtrocknung zu einer Zusammensetzung von mindestens 80 Gew.-% Feststoffen führt.

**11.** FCC-Katalysatorzusammensetzung nach Anspruch 3, wobei das Wasser durch Filtration entfernt wird, um ein gefiltertes Gel mit mehr als etwa 25 Gew.-% Feststoffen zu erzeugen, vorzugsweise wobei das gefilterte Gel weiter thermisch behandelt wird, um ein trockenes gefiltertes Pulver mit mindestens 35 Gew.-% Feststoffen zu erzeugen.

**12.** Verfahren nach Anspruch 6, wobei die rehydrierte Lösung vor der Kristallisation in Schritt (c) über einen bestimmten Zeitraum gealtert wird.

**13.** Verfahren, das das Inkontaktbringen einer Katalysatorzusammensetzung des FCC-Katalysators nach Anspruch 1 mit einem Kohlenwasserstoff-Einsatzmaterial, einem aus Abfall gewonnenen Einsatzmaterial, einem biologisch gewonnenen Einsatzmaterial oder Mischungen davon umfasst.

## Revendications

**1.** Composition de catalyseur de FCC, comprenant :

> a. d'environ 2 à environ 80 % en poids d'une ou de plusieurs zéolites,
> b. d'environ 15 à environ 50 % en poids de boehmite quasi-cristalline,
> c. d'environ 0 à environ 50 % en poids de boehmite microcristalline,
> d. plus d'environ 0 à environ 25 % en poids de silice ;
> facultativement
> e. plus d'environ 0 à environ 20 % en poids de phosphate ;

dans laquelle l'une ou les plusieurs zéolites sont préparées par le biais des étapes suivantes :

> a. la préparation d'un mélange de précurseur aqueux ;
> b. l'élimination d'au moins 5 % en poids de l'eau totale de la solution de précurseur aqueux pour créer une solution avec une teneur en solides plus importante ;
> c. la cristallisation de la solution de l'étape (b) pour créer un produit de zéolite.

**2.** Composition de catalyseur de FCC de la revendication 1, dans laquelle l'une ou les plusieurs zéolites sont des zéolites de type faujasite.

**3.** Composition de catalyseur de FCC de la revendication 1, dans laquelle la préparation de zéolite comprend en outre :

> a. la préparation d'un mélange de précurseur aqueux à partir d'eau, d'une source de silicium, d'une source d'aluminium ;
> b. l'élimination d'au moins 5 % en poids de l'eau totale de la solution précurseur aqueux pour créer une solution avec une teneur en solides plus importante ;
> c. la cristallisation de la solution de l'étape (b) pour créer une composition d'aluminosilicate.

**4.** Composition de catalyseur de FCC de la revendication 1, dans laquelle l'étape de cristallisation (c) est traitée thermiquement à une ou à plusieurs températures.

**5.** Composition de catalyseur de FCC de la revendication 2, dans laquelle au moins 10 % en poids, de préférence au moins 25 % en poids, de façon davantage préférée au moins 50 % en poids, de façon encore davantage préférée au moins 75 % en poids, en particulier au moins 90 % en poids de l'eau totale est éliminé du précurseur aqueux.

**6.** Composition de catalyseur de FCC de la revendication 2, comprenant une étape supplémentaire de réhydratation du produit de l'étape (b) pour créer une solution avec plus d'environ 15 % en poids de solides avant l'étape (c).

7. Composition de catalyseur de FCC de la revendication 2, dans laquelle l'étape (c) comprend la mise en réaction de la solution de l'étape (b) à 60 à 300 °C pendant 1 minute à 48 heures et la cristallisation libre.

8. Composition de catalyseur de FCC de la revendication 2, dans laquelle l'eau est éliminée par filtration, séchage par pulvérisation, ou traitement thermique.

9. Composition de catalyseur de FCC de la revendication 3, dans laquelle l'eau est éliminée par traitement thermique à un temps et à une température pour créer un xérogel avec une teneur en solides supérieure à 35 % en poids de solides.

10. Composition de catalyseur de FCC de la revendication 3, dans laquelle l'eau est éliminée par séchage par pulvérisation pour créer une poudre fluide avec plus de 40 % en poids de solides, de préférence dans laquelle le séchage par pulvérisation a pour résultat une composition d'au moins 75 % en poids de solides, de façon davantage préférée dans laquelle le séchage par pulvérisation a pour résultat une composition d'au moins 80 % en poids de solides.

11. Composition de catalyseur de FCC de la revendication 3, dans laquelle l'eau est éliminée par filtration pour créer un gel filtré de plus d'environ 25 % en poids de solides, de préférence dans laquelle le gel filtré est traité thermiquement davantage pour créer une poudre filtrée à sec d'au moins 35 % en poids de solides.

12. Procédé de la revendication 6, dans lequel le vieillissement de la solution réhydratée est effectué pendant un laps de temps avant la cristallisation de l'étape (c).

13. Procédé qui comprend la mise en contact d'une composition de catalyseur du catalyseur FCC de la revendication 1 avec une alimentation en hydrocarbure, un produit d'alimentation dérivé de déchets, un produit d'alimentation biodérivé, ou des mélanges de ceux-ci.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4086187 A
- US 4206085 A
- US 20200338536 A
- US 20180361367 A
- US 6916757 B

- WO 0112551 A
- WO 0112552 A
- WO 0112554 A
- US 9381502 B
- US 9643166 B

**Non-patent literature cited in the description**

- **B. WANG** ; **P.K. DUTTA**. Synthesis method for introducing mesoporosity in a faujasitic-like zeolite system from a sodium aluminosilicate gel composition. *Microporous and Mesoporous Materials*, 2017, vol. 239, 195-208

- **THOMMES, M.** Textural Characterization of Zeolites and Ordered Mesoporous Materials by Physical Adsorption. *Stud. Surf. Sci. Catal*, 2007, vol. 168, 495-524